# EUROPÄISCHE PATENTSCHRIFT

(11) **EP 2 057 021 B1**
(45) Veröffentlichungstag und Bekanntmachung des Hinweises auf die Patenterteilung: **28.11.2012**
(21) Anmeldenummer: 07764328.6
(22) Anmeldetag: 18.05.2007
(51) Int. Cl.: B60B 33/00, B62B 3/14, B62B 5/04, B63B 5/04

(54) **WEGFAHRSPERRE FÜR EINKAUFSWAGEN**
IMMOBILIZER FOR SHOPPING TROLLEYS
DISPOSITIF D'IMMOBILISATION POUR CHARIOT DE SUPERMARCHÉ

(30) Priorität: 23.05.2006 DE 202006008341 U
(43) Veröffentlichungstag der Anmeldung: 13.05.2009
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2007/000905
(87) Internationale Veröffentlichungsnummer: WO 2007/134583

(56) Entgegenhaltungen:
- WO-A-2006/086975
- WO-A-2006/086977
- DE-U1-202004 017 400
- US-A- 3 031 037
- US-A- 5 806 862

## Beschreibung

### Technisches Gebiet

Die Erfindung betrifft Wegfahrsperren für Einkaufswagen, welche durch magnetische Kräfte aktiviert und deaktiviert werden.

### Stand der Technik

Eine derartige Wegfahrsperre ist beispielsweise bekannt aus deutschen Gebrauchsmuster 202004017400.6. Dort ist beschrieben, dass eine Wegfahrsperre in Rollen eines Einkaufswagens, welche aktiviert wurde als die Rollen eine Magnetleiste im Boden passiert hatten wieder deaktivierbar ist, wenn die Rollen erneut eine solche Magnetleiste im Boden passieren.

Die Magnetleiste ist an der Grenze des Bereiches angebracht, in welchem der Einkaufswagen benutzt werden darf. Wenn jemand diesen zulässigen Bereich verlässt, passierten die Rollen die Magnetleiste und die Wegfahrsperre wird aktiviert.

Wird ein Einkaufswagen, der sich mit aktivierter Wegfahrsperre ausserhalb des zulässigen Bereichs befindet wieder zurück in den zulässigen Bereich gebracht, wird die Magnetleiste erneut passiert und die Wegfahrsperre wird wieder deaktiviert.

Es hat sich gezeigt, dass Personen, die einen Einkaufswagen von außerhalb zurück in den zulässigen Bereich bringen den Einkaufswagen an einer Seite anheben, da dieser dann trotz der aktivierten Wegfahrsperre zumindest eingeschränkt manövrierfähig ist.

Beim Passieren der Magnetleiste im Boden ist die Rolle an der angehobenen Seite des Einkaufwagens zu weit von der Magnetleiste entfernt, um die Wegfahrsperre zu deaktivieren. Eine Wegfahrsperre ähnlichem Prinzips zeigt das US 3,031,037.

Das US 5,806,862 beschreibt eine Wegfahrsperre für einen mit Rollen versehenen Wagen, die nach dem Aktivieren nur noch eine vorbestimmte Anzahl von Umdrehungen der Rolle ermöglicht.

Das WO 2006/086975 A2 und das WO 2006/086977 A2 zeigen das wechselseitige Aktivieren und Deaktivieren einer Wegfahrsperre durch ein Magnetfeld, wobei das deaktivierende Magnetfeld geringer sein kann als das aktivierende Magnetfeld.

### Offenbarung der Erfindung

### Technische Aufgabe

Es ist Aufgabe der Erfindung, eine Wegfahrsperre zu schaffen, bei welcher das oben beschriebene Verhalten der Benutzer berücksichtigt ist und ein Deaktivieren der Wegfahrsperre zuverlässiger funktioniert.

### Technische Lösung

Diese Aufgabe wird gelöst durch eine Wegfahrsperre, bei welcher zum Deaktivieren geringere magnetische Kräfte nötig sind, als um die Wegfahrsperre zu aktivieren.

### Vorteilhafte Wirkungen

Durch die erfindungsgemäße Lösung wird vorteilhaft erreicht, dass die Wegfahrsperre in einer Rolle, die sich an der angehobenen Seite des Einkaufswagens befindet trotz des größeren Abstandes zur Magnetleiste deaktiviert wird. Die erfindungsgemäße Wegfahrsperre reagiert beim Deaktivieren empfindlicher. Hierdurch wird kompensiert, dass aufgrund des Abstandes von angehobener Rolle und Magnetleiste eine geringere magnetische Kraft einwirkt.

Eine weitere vorteilhafte Wirkung ist darin zu sehen, dass eine zusätzliche Hilfs-Magnetleiste gezielt dazu eingesetzt werden kann, um einen weiteren Deaktivierungsvorgang der Wegfahrsperre einzuleiten. Diese Hilfs-Magnetleiste hat eine geringere magnetische Kraft als die oben beschriebene Magnetleiste, die an der Grenze des zulässigen Bereiches angebracht ist.

Es hat sich in der Praxis gezeigt, dass die Personen, einen an einer Seite angehobenen Einkaufswagen wieder absetzen, wenn nach dem Passieren der Magnetleiste zumindest an einem Teil der Rollen die Wegfahrsperre wieder deaktiviert ist.

Bei solch einem Einkaufswagen ist dann oftmals nur noch an einer der Rollen die Wegfahrsperre aktiviert und eben diese noch aktivierte Wegfahrsperre kann durch die Hilfs-Magnetleiste deaktiviert werden.

Der Vorteil der Erfindung liegt darin, dass diese Hilfs-Magnetleiste von Rollen mit deaktivierter Wegfahrsperre passiert werden kann und sich nichts ändert, hingegen eine Rolle mit aktivierter Wegfahrsperre deaktiviert wird.

Diese Hilfs-Magnetleisten können an verschiedenen Stellen innerhalb des zulässigen Bereichs platziert werden und bieten sich die Stellen an, die bei der Benutzung eines Einkaufswagens mit hoher Wahrscheinlichkeit passiert werden, etwa die Sammelstellen.

### Kurze Beschreibung der Zeichnungen

Ein mögliches Ausführungsbeispiel der Erfindung wird anhand von zwei Figuren näher erläutert. Es zeigen:

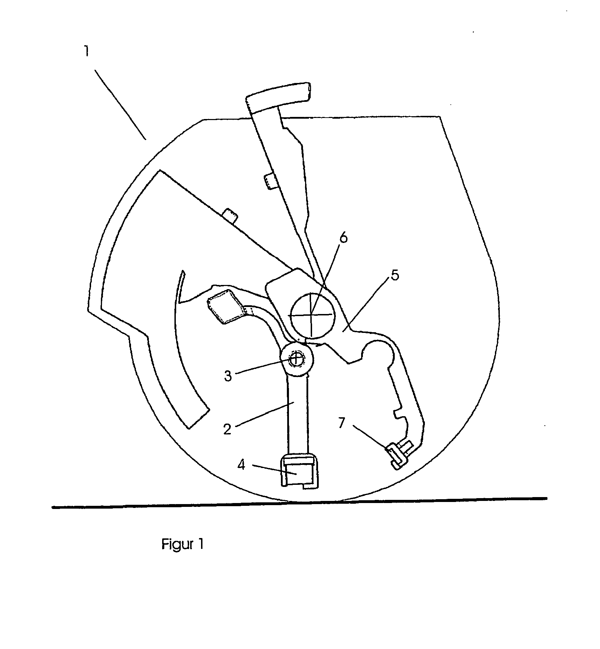

Figur 1 eine erfindungsgemäße Wegfahrsperre im deaktivierten Zustand
Figur 2 die Wegfahrsperre aus Figur 1 im aktivierten Zustand

Die Wegfahrsperre 1 umfasst neben anderen Teilen, die aus Gründen der Übersichtlichkeit nicht dargestellt sind einen Hebel 2, der um einen Drehpunkt 3 beweglich gelagert ist. Der Hebel trägt an einem Arm einen Magneten 4.

Die Mechanik umfasst einen weiteren Hebel 5, der um einen Drehpunkt 6 drehbar gelagert ist. Am einen Ende des Hebels befindet sich ein Magnet 7.

Die Stellung dieses Hebels 5 ist abhängig vom Betriebszustand der Wegfahrsperre. In der gezeigten Darstellung befindet sich die Wegfahrsperre im deaktivierten Zustand.

Die grundsätzliche Funktionsweise der Wegfahrsperre ist auch anhand dieser stark vereinfachten Darstellung erklärbar: Sobald die Rolle über eine Magnetleiste rollt, entstehen zwischen dem Magneten 4 und der Magnetleiste abstoßende Kräfte, welche ein Schwenken des Hebels 2 entgegen des Uhrzeigersinns bewirkt.

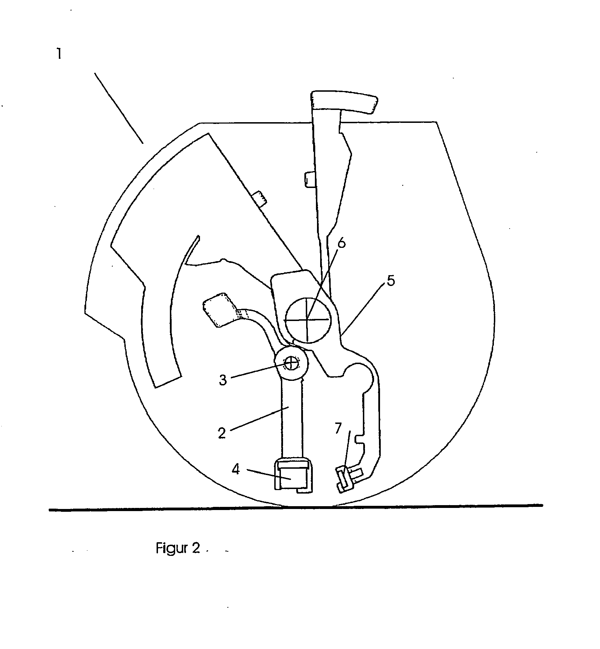

Dieses Schwenken des Hebels 2 löst einen nicht näher dargestellten mechanischen Ablauf aus, der zur Aktivierung der Wegfahrsperre führt. Der Hebel 2 kehrt anschließend wieder zurück in die hier gezeigte Position, aber der Hebel 5 befindet sich dann in der in Figur 2 dargestellten Position.

Die Figur 2 zeigt den aktivierten Zustand der Wegfahrsperre. Der Hebel 5 ist etwas im Uhrzeigersinn gedreht. Hierdurch kommt der Magnet 7 näher an den Magneten 4 und übt hierdurch eine gewisse Anziehungskraft aus.

Wenn die Rolle in diesem Zustand über eine Magnetleiste bewegt wird, dann wird die abstoßende magnetische Kraft, die von der Magnetleiste ausgeht mit der magnetisch anziehenden Kraft, die vom Magneten 7 ausgeht kombiniert.

Um den Hebel 2 entgegen des Uhrzeigersinns zu drehen - und damit den Ablauf auszulösen, der zur Deaktivierung der Wegfahrsperre führt - ist eine geringere magnetisch abstoßende Kraft der Magnetleiste notwendig. Eine Magnetleiste, die gegenüber der zur Aktivierung verwendeten Magnetleiste "schwach" ist, bewirkt hierdurch vorteilhaft ebenfalls die Deaktivierung.

Hierdurch ist es möglich, dass die Wegfahrsperre sowohl von einer "starken" Magnetleiste, wie sie auch zum Aktivieren der Wegfahrsperre verwendet wird, als auch von einer "schwachen" Magnetleiste desaktiviert wird.

Die "starken" Magnetleisten befinden sich an der Grenze des zulässigen Bereichs. Wenn ein Einkaufswagen den zulässigen Bereich verlässt, dann passiert er die "starke" Magnetleiste, wodurch die Wegfahrsperre an den Rollen des Einkaufswagens aktiviert wird.

Durch das Aktivieren der Wegfahrsperre wird bei mindestens zwei Rollen der Lenkwinkel fixiert, wobei der Lenkwinkel bei jeder Rolle in einem unterschiedlichen Lenkwinkel fixiert ist.

Hierdurch ist eine Weiterfahrt des Einkaufswagens sehr stark behindert, wesshalb dieser dann meistens nach kurzer Distanz stehen gelassen wird.

Ein Einkaufswagen, der ausserhalb des zulässigen Bereichs stehen gelassen wurde wird aber wiederum oft von einem anderen Kunden, der einkaufen möchte und daher einen Einkaufswagen braucht wieder zurück in den zulässigen Bereich gebracht.

Da der Einkaufswagen mit der aktivierten Wegfahrsperre leichter zu manövrieren ist, wenn nur eine der Rollen, bei welchen der Lenkwinkel fixiert ist die Fahrbahn berührt, heben manche Kunden beim Zurückbringen den leeren Einkaufswagen einseitig an und passieren so die "starke" Magnetleiste.

Die "starke" Magnetleiste ist daher von der Wegfahrsperre in der Rolle, die sich an der angehobenen Seite des Einkaufswagens befindet weiter entfernt.

Die von der "starken" Magnetleiste ausgehenden magnetischen Kräfte verringern sich mit zunehmenden Abstand, daher reichen die magnetischen Kräfte nicht aus, um die Wegfahrsperre in der Rolle, die sich an der angehobenen Seite des Einkaufswagens befindet wieder zu deaktivieren.

Beim Passieren der "starken" Magnetleiste wird unter den geschilderten Umständen nur die Wegfahrsperre an der Rolle deaktiviert, die sich auf der Fahrbahn befunden hat.

Nachdem der Kunde die "starke" Wegfahrsperre passiert hat, bemerkt er, dass die Wegfahrsperre, die sich an der Rolle befindet, welche immer Bodenkontakt hatte nun deaktiviert ist und er setzt den einseitig angehobenen Einkaufswagen wieder mit allen Rollen auf die Fahrbahn.

Nun wirkt sich die immer noch aktivierte Wegfahrsperre im ehemals angehobenen Rad weiterhin negativ auf die Manövrierfähigkeit des Einkaufswagens aus, obwohl der Einkaufswagen innerhalb des zulässigen Bereichs bewegt wird.

Fährt nun der Einkaufswagen über eine "schwache" Magnetleiste, dann wird nun auch die Wegfahrsperre im ehemals angehobenen Rad deaktiviert und es stellt sich die ungehinderte Manövrierfähigkeit ein.

Eine solche "schwache" Magnetleiste oder mehrere solcher "schwachen" Magnetleisten sind bevorzugt an solchen Stellen innerhalb des zulässigen Bereichs platziert, die von Kunden mit hoher Wahrscheinlichkeit passiert werden, etwa im Eingangsbereich des Ladens oder in der Nähe von Abstellgaragen für die Einkaufswagen.

### Gewerbliche Anwendbarkeit

Die Erfindung ist gewerblich dort einsetzbar, wo Wegfahrsperren für Einkaufswagen zum Einsatz kommen, etwa Einzelhandels- oder Großhandelsgeschäfte.

## Patentansprüche

1. Anordnung zum Aktivieren und Deaktivieren einer Wegfahrsperre, umfassend eine Wegfahrsperre, bei welcher die Aktivierung und die Deaktivierung durch magnetische, von einem externen Magnetfeld erzeugte und auf die Wegfahrsperre einwirkende Kräfte erfolgt, wobei zum Deaktivieren geringere, von dem externen Magnetfeld erzeugte Kräfte nötig sind, als die zum Aktivieren benötigten magnetisch erzeugten Kräfte,
**dadurch gekennzeichnet, dass**
die Anordnung eine erste und eine zweite Magnetleiste aufweist, wobei die zweite Magnetleiste eine geringere magnetische Kraft aufweist als die erste Magnetleiste.

2. Anordnung nach Anspruch 1,
**dadurch gekennzeichnet, dass**
im aktivierten Zustand der Wegfahrsperre ein im Inneren der Wegfahrsperre angeordneter Magnet (7) eine Position einnimmt, in welcher dieser Magnet (7) die Wirkung der von aussen auf die Wegfahrsperre einwirkenden magnetisch erzeugten Kräfte unterstützt.

3. Anordnung nach einem der Ansprüche 1 oder 2,
**dadurch gekennzeichnet, dass**
im aktivierten Zustand der Wegfahrsperre ein im Inneren der Wegfahrsperre angeordneter Magnet (7) eine Position einnimmt, in welcher sich dieser Magnet (7) näher an einem Magneten (4) befindet, welcher sich unter dem Einfluss des von aussen wirkenden Magnetfeldes bewegen kann.

4. Anordnung nach einem der Ansprüche 1 bis 3,
**dadurch gekennzeichnet, dass**
im aktivierten Zustand der Wegfahrsperre ein im Inneren der Wegfahrsperre angeordneter Magnet (7) eine Position einnimmt, in welcher sich dieser Magnet (7) näher an dem Magnet (4) befindet und der Magnet (4) und der Magnet (7) so angeordnet sind, dass sich die beiden Magneten anziehen.

## Claims

1. An arrangement for activating and deactivating an immobiliser, comprising an immobiliser, in which the activation and the deactivation takes place by means of magnetic forces generated by an external magnetic field and acting on the immobiliser, wherein for deactivating, smaller forces generated by the external magnetic field are required than the magnetically generated forces required for activating,
**characterised in that**
the arrangement has a first and a second magnetic strip, wherein the second magnetic strip has a smaller magnetic force than the first magnetic strip.

2. The arrangement according to Claim 1,
**characterised in that**
in the activated state of the immobiliser, a magnet (7) arranged inside the immobiliser assumes a position in which this magnet (7) supports the effect of the magnetically generated forces acting externally on the immobiliser.

3. The arrangement according to one of Claims 1 or 2,
**characterised in that**
in the activated state of the immobiliser, a magnet (7) arranged inside the immobiliser assumes a position in which this magnet (7) is located closer to a magnet (4) which can move under the influence of the magnetic field acting externally.

4. The arrangement according to one of Claims 1 to 3,
**characterised in that**
in the activated state of the immobiliser, a magnet (7) arranged inside the immobiliser assumes a position in which this magnet (7) is located closer to the magnet (4), and the magnet (4) and the magnet (7) are arranged in such a manner that the two magnets attract one another.

## Revendications

1. Dispositif pour activer et désactiver un dispositif d'immobilisation, comprenant un dispositif d'immobilisation avec lequel l'activation et la désactivation a lieu grâce à des forces magnétiques générées par un champ magnétique externe et s'exerçant sur le dispositif d'immobilisation, moyennant quoi pour la désactivation, il faut des forces plus faibles générées par le champ magnétique externe que ne le sont les forces générées magnétiquement pour l'activation,
**caractérisé en ce que**
le dispositif présente une première et une deuxième barre magnétique, la deuxième barre magnétique présentant une force magnétique plus faible que la première barre magnétique.

2. Dispositif selon la revendication 1, **caractérisé en ce qu'**à l'état activé du dispositif d'immobilisation, un aimant (7) disposé à l'intérieur du dispositif d'immobilisation adopte une position dans laquelle cet aimant (7) contribue à l'effet des forces générées magnétiquement s'exerçant depuis l'extérieur sur la dispositif d'immobilisation.

3. Dispositif selon la revendication 1 ou 2, **caractérisé en ce qu'**à l'état activé du dispositif d'immobilisation, un aimant (7) disposé à l'intérieur du dispositif d'immobilisation adopte une position dans laquelle cet aimant (7) se trouve plus près d'un aimant (4), lequel peut se mouvoir sous l'influence du champ magnétique s'exerçant depuis l'extérieur.

4. Dispositif selon l'une des revendications 1 à 3, **caractérisé en ce qu'**à l'état activé du dispositif d'immobilisation, un aimant (7) disposé à l'intérieur du dispositif d'immobilisation adopte une position dans laquelle cet aimant (7) se trouve plus près de l'aimant (4) et où l'aimant (4) et l'aimant (7) sont disposés de manière à ce que les deux aimants s'attirent.
